# EUROPEAN PATENT SPECIFICATION

(11) **EP 1 345 855 B1**
(45) Date of publication and mention of the grant of the patent: **16.06.2004**
(21) Application number: 01994688.8
(22) Date of filing: 21.11.2001
(51) Int. Cl.: C01G 21/06

(54) **CHEMICAL REACTOR VESSEL AND PROCESS FOR THE CONTINUOUS OXIDATION OF LEAD TO A LEAD OXIDE**
CHEMISCHER REAKTOR UND VERFAHREN ZUR KONTINUIERLICHEN OXIDATION VON BLEI ZU EINEM BLEIOXID
CUVE DE REACTION CHIMIQUE ET PROCEDE D'OXYDATION CONTINUE DE PLOMB POUR OBTENIR UN OXYDE DE PLOMB

(30) Priority: 24.11.2000 US 718370
(43) Date of publication of application: 24.09.2003
(73) Proprietor: Hammond Group, Inc., Hammond, IN 46320 (US)
(72) Inventor: KLOTZ, Hanns, G., Highland, IN 46322 (US); WILKE, William, Peter, IV, Munster, IN 46321 (US)
(74) Representative: Jönsson, Hans-Peter, Dr.Dipl.-Chem.
(86) International application number: PCT/EP2001/013492
(87) International publication number: WO 2002/042213

(56) References cited:
- WO-A-95/10482
- GB-A- 1 069 430
- US-A- 2 098 268

## Description

### BACKGROUND OF THE INVENTION:

The invention relates to a chemical reactor vessel for the continuous oxidation of lead (Pb) to yellow lead oxide (PbO, ortho-rhombic litharge), and a process for the continuous oxidation of lead (Pb) to said yellow lead oxide (PbO) in said chemical reactor vessel.

Litharge is an important article of commerce, used on a large scale in a number of industrial manufacturing processes. In the manufacture of glass, high purity litharge, for example containing less than 0.01 % metallic lead, is required.

Molten litharge is extremely corrosive and molten lead is capable of dissolving all metals. Control of the reaction also poses a difficult problem as the oxidation of lead at elevated temperatures is extremely rapid and highly exothermic, like a flame. The temperature in the flame may reach up to 1700 °C.

Litharge of sufficiently high purity for use in the glass industry has been manufactured by the Barton pot process for many years. In this process, lead is melted and fed to the Barton pot where it is agitated and contacted with air at 450 to 500 °C. In the Barton pot, the pool of molten lead is stirred by high speed blades. This throws up droplets which are oxidized by the air, but the oxidation is incomplete. The solid powder product, containing from about 70 to 99 % PbO, is entrained in the air stream which the heavier lead doplets fall back into the pool.

The Barton pot process is limited by the requirement for multiple steps, involving an expensive train of equipment, and also by the fact that the maximum size of a Barton pot is limited, which frequently creates the need for a number of Barton pots to achieve a desired production level. The Barton pot process and other prior art processes are described in "LEAD OXIDES - Chemistry - Technology - Battery Manufacturing Uses - History" (1974), Independent Battery Manufactures Association, Inc., Florida USA; at pages 21 to 25. Reference is made to Barton's US Patents 988,963 (1911) and 1,060,153 (1913), Pope and Barton USA Patent 633,533 (1899), Mayer 2,235,487 (1941), and Vehernkamp et al. 3,322,496 (1967).

In describing a "fused litharge furnace" with reference to Hughes US Patent 975,955 (1910) and Petraeus US Patent 592,594 (1897), which is said to be "now mainly of historical interest" this book comments that "A mixed bath of lead and litharge at about 1000°C has almost fantastic corrosive and erosive properties" which has caused major problems.

The book also describes the "fume type process", which produced a "smoke" from which a product of fine particle size was recovered in a baghouse. (Calbeck US Patent 1,511,215 (1924) and Garesche US Patent 2,065,218 (1936)).

WO 95/10482 discloses a process capable of being carried out continuously in a single reactor.

The process essentially comprises reacting molten lead with oxygen at a temperature above the melting point of litharge, whereby litharge is formed as a liquid product. In particular oxygen is injected into a bath containing molten lead, typically at about 1000 °C, in such manner that the velocity of the injected oxygen as it expands into the bath is at least Mach 1 and preferably at least Mach 1.25. Preferably the oxygen used contains at least 95 % O₂, more preferably at least 99.7 % O₂ and most preferably at least 99.9 % O₂. By "Mach 1", as will be clearly understood in the art, it is meant the speed of sound in the gas concerned. However, there are serious doubts that such high velocity may be reached with the equipment described herein.

Said known chemical reaction vessel is constructed of a material which can contain the litharge/lead bath, and also copes with the high heat flux from the bath. The use of a vessel with cooled walls of good thermal conductivity allows both of these functions to be performed. In order to prevent attack by liquid litharge, the interior hot surface of the vessel wall must be kept below the melting point of litharge, and preferably also below the melting point of lead to prevent attack by molten lead, although this is less destructive than molten litharge. Copper is the preferred metal for the reactor and tuyere due to its high heat conductivity. Other metals may be suitable. In particular, the copper vessel is cooled by water sprays acting in an enclosure which is open to the atmosphere, thus avoiding a risk of explosion which might occur in a reactor utilizing an enclosed water jacket. In particular, the vessel has a high ratio of external (cooled) surface area to internal (hot) surface area. This reduces the heat flux to the cooling water, and enables a simpler design of water sprays.

### SUMMARY OF THE INVENTION:

The chemical reactor vessel and process described in the prior art suffers from the position of the injection means being located within the area of the bottom of the reaction chamber. Although this known position allows a cooling of the injection nozzles, however, the area approximate to the tuyere of the oxidizing material becomes extremely hot due to the exothermic reaction providing temperatures in a range well ahead of 1100 °C due to the oxidizing of Pb by the oxidizing medium.

The primary object of the present invention is to provide a novel chemical reactor vessel adapted in particular for an improved continuous oxidation of lead to a specific lead oxide, i.e. ortho-rhombic litharge.

A further object of the invention is to provide an improved process for the continuous oxidation of lead (Pb) to yellow lead oxide (PbO).

Other objects and advantages of the present invention will become apparent from the following description, taken in connection with the accompanying drawings, wherein, by way of illustration and example, embodiments of the present invention are disclosed.

The invention relates to a process as in claim 9 for the continuous oxidation of lead (Pb) to yellow lead oxide (PbO) in a chemical reaction chamber containing a two phase separated system of a lower phase containing predominantly molten Pb and an upper phase consisting essentially of molten PbO in a steady state reaction, by
(a) providing a continuous flow of molten Pb to said reaction chamber,
(b) continuously injecting an oxidizing medium to the lower phase of molten Pb via an injection means protruding from the bottom of the reactor,
(c) allowing the oxidizing medium to oxidize said molten Pb by providing a lower phase predominantly comprising Pb and an upper phase essentially consisting of PbO,
(d) adjusting the reaction velocity and the reaction temperature to provide a steady state reaction indicated by an interface phase separation line between the lower phase containing predominantly Pb and the upper phase consisting essentially of PbO appearing at a desired location within the reaction chamber and
(e) continuously draining the overflow of resultant PbO from the upper phase of the reaction chamber.

In order to improve said chemical reactive vessel and said process for the continuous oxidation of lead to said lead oxide, temperature regulation means are used according to the present invention to adjust the reaction velocity and the reaction temperature for maintaining the phase separation line essentially at a determined location in the reaction chamber and furthermore using injection means adjusted for continuously providing an oxidizing fluid medium to the lower phase of molten Pb in said reaction chamber, the injection means protruding from the bottom of the reaction chamber by being positioned on a cone above the area of the bottom of the reaction chamber.

### BRIEF DESCRIPTION OF THE DRAWINGS:

Fig. 1 is a schematic representation of the basic elements of the chemical reaction vessel according to the present invention.

Fig. 2 is a schematic representation of the similar chemical reaction vessel depicted in Fig. 1 but showing in detail the position of the injection means.

### Detailed Description of the Drawings:

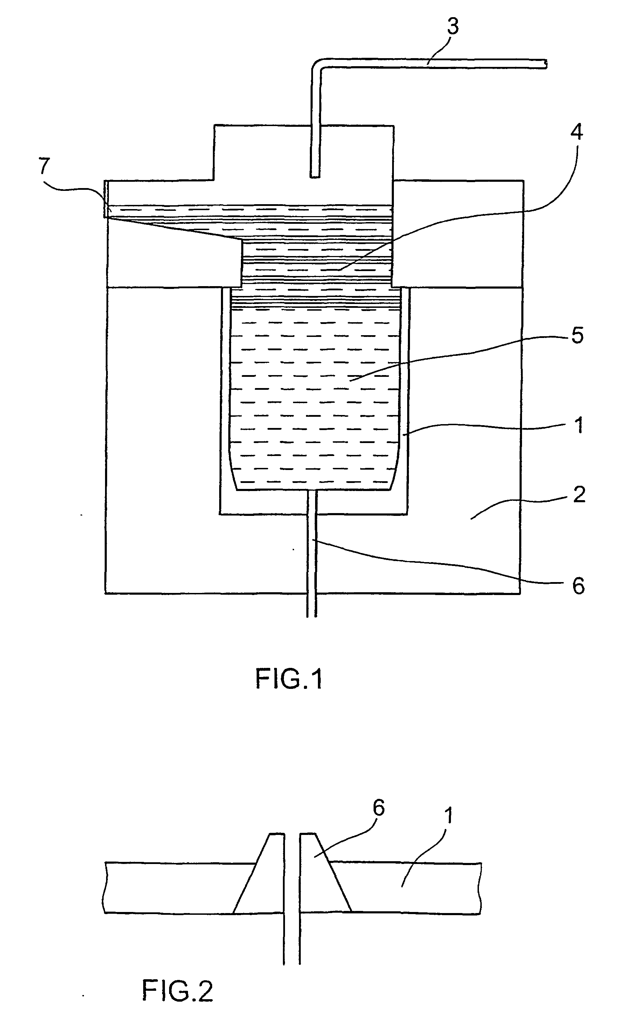

In the preferred embodiment a chemical reactor vessel is illustrated in Fig. 1.

The chemical reactor vessel 1 is located in an enclosure 2 and surrounded by an array of water sprays 3 (not shown) fed by ring means not shown, the cooling water during operation exiting the apparatus via a drain. The entire apparatus is mounted in known manner (not shown), so as to be tiltable about a horizontal axis, whereby the liquid contents may be poured out, enabling the apparatus to be shut down without solidification of the contents within the chemical reaction vessel.

Molten lead is fed by conduit 3 to the top of reactor 1 above lead oxide phase 4. Lead oxide phase 4 is positioned on top of the phase of molten lead 5. An oxidizing medium is fed to the bottom of reactor 1 by injection nozzle 6 protruding from the bottom of reactor 1. Lead oxide obtained by the use of above mentioned reactor 1 is drained by overflow 7.

Fig. 2 specifies the tuyere being located in the area of the bottom of reactor vessel 1. The tip of the tuyere extends from the bottom of the vessel. An oxidizing medium can be introduced to the reactor vessel via the conduit. The injection means having a frustoconical shape may contain additional cooling means, not shown in Fig. 2.

### DESCRIPTION OF THE PREFERRED EMBODIMENT:

An appropriate method of starting up the process in principle is described in WO 95/10482 and thus, insofar it is referred thereto.

In operation, molten lead entering at the entering section through a pipe flows along the wall of the reactor or any other position of the surface of molten litharge except the direct area of the overflow. An oxidizing medium is injected into the lower portion of the reaction chamber through a tuyere located at a defined position and having a velocity sufficient to maintain a flame zone at a distance from the tuyere, thus, minimizing back attack by the highly corrosive components of the bath. As the bath is maintained at a temperature above the melting point of litharge, the entire bath is in the liquid phase and the litharge produced by the oxidation reaction, being of lower density than molten lead, rises to the top of the bath and is drawn off by a drainage section.

By maintaining approximately sonic velocity of the stream of oxidizing medium as it expands into the bath and positioning the tip of said tuyere on top of a cone protruding from the bottom of the chamber to the inside of the reaction chamber as shown in Fig. 2, back attack of the exothermic reaction to the tuyere tip is avoided according to the present invention, in particular due to the protrusion of the injection section into the reaction chamber.

The injection tuyere or nozzle is preferably fabricated of copper-containing material with a separate pressurized water cooling means. In operation, the bath is quiescent, indicating that all of the oxygen is consumed. Litharge is formed in the oxidation reaction and floats upward, and overflow is removed by the drainage section.

Control of the reaction velocity and the reaction temperature within the reaction chamber strictly depends on the amount and the velocity of the oxidizing medium introduced into the reaction chamber. Thus, the location of the interface phase separation line between the lower phase containing predominantly of molten Pb and the upper phase consisting essentially of PbO is of high importance in a continuous reaction system. Said upper phase consisting essentially of PbO contains no or only traces of metallic lead. Traces of metallic lead in the sense of the present invention define an amount in the region of ppm. Raising of the interface separation line may cause an overflow of unreacted lead. Lowering of the separation line may cause, *inter alia,* deterioration of the tuyere. Although temperature measurement within the wall of the reaction chamber seems to be quite easy, serious problems arise in the present system of molten Pb and molten PbO due to the high heat conductivity of Pb and the low heat conductivity of PbO. Accordingly, the temperature is monitored to help locate the interface phase separation line between the upper phase consisting essentially of PbO and the lower phase comprising predominantly of Pb. In case the interface phase separation line moves in the direction of the top of the reaction chamber, the velocity and/or the amount of oxidizing medium should be decreased. On the other hand, in case the interface separation line moves in the direction of the bottom of the reaction chamber the velocity and/or the amount of oxidizing medium should be increased. In the same way the amount of molten Pb introduced to the reaction chamber could be increased or decreased if necessary while constantly maintaining the introduction of the oxygen medium.

The injection means adjusted for continuously providing an oxidizing fluid medium to the lower phase of molten Pb, according to the present invention protrude from the bottom of the reaction chamber.

In particular, it is preferred to mount the injection nozzle, preferably being a Bernoulli nozzle, on a cone which has a frustoconical shape with a tip extending from the bottom of the reaction chamber preferably by at least about 5 cm, more preferably by at least about 10 cm, most preferably by at least about 20 cm.

In a further preferred embodiment according to the present invention, the chemical reactor vessel comprises externally cooling means, in particular a water cooling fluid as is known from the prior art.

The reactor according to WO 95/ 10482 is characterized in that the temperature regulating means comprises additional heating means in the area above the upper phase of the molten material. In a preferred embodiment, said heating means comprises a burner to maintain the temperature above the surface of the molten phase consisting essentially of PbO (888°C) to allow a continuous drainage of molten PbO via the drainage section. Such expensive temperature regulating means are not required by the present invention.

A further embodiment of the present invention relates to a process for the continuous oxidation of lead (Pb) to lead oxide (PbO) as stated above.

Preferably, the process is characterized by introducing a continuous flow of molten Pb to the chemical reaction vessel having a temperature adjusted in the range of about 900 °C to about 1200 °C, more preferred at a temperature of about 1100 °C.

In principle, any fluid oxidizing medium can be used according to the present invention. Nevertheless, it is in particular preferred to introduce a continuous stream of oxygen containing preferably 95 % O₂, more preferably 99,9 % O₂ to the lower phase in the reaction chamber comprising predominantly molten Pb. It is in particular preferred to use an oxidizing medium at ambient temperature. Ambient temperature in the sense of the present invention means a low temperature below 150°C to improve cooling of the injection means. Preferably, the flow rate of the fluid oxidizing medium is adjusted to a rate of at least Mach 1, maintaining said velocity as long as possible and extending as far as possible from the tip of the tuyere.

The litharge product obtained by the use of the chemical reactor vessel according to the present invention contains negligible contamination of copper, iron, chromium or nickel, indicating that there is practically no corrosion of the reaction vessel. Silver is partially enriched in the phase of molten Pb. The molten litharge leaving the reactor via the drainage section, will be granulated as is known by the prior art to be used for commercial purposes.

## Claims

1. A chemical reactor vessel for the continuous oxidation of lead (Pb) to yellow lead oxide (PbO, litharge), the reactor vessel having a reaction chamber with an inner surface made of a copper containing material where being in contact to a two phase separated melt of Pb and PbO, the lower phase predominantly containing Pb and the upper phase essentially consists of PbO,
the reactor vessel containing
an entering section for continuously providing molten Pb to the reaction chamber,
a drainage section to continuously remove molten PbO from the reaction chamber by overflow,
temperature regulating means and
injection means adjusted for continuously providing an oxidizing fluid medium to the lower phase of molten Pb in said reaction chamber,
**characterized in that**
the tip of the injection means protrudes from the bottom of the reaction chamber into the reaction chamber and
said temperature regulation means adjusting the reaction velocity and the reaction temperature for maintaining the interface phase separation line essentially at a determined location in the reaction chamber.

2. The chemical reactor vessel according to claim 1 whereby the copper containing material is consisting of copper metal.

3. The chemical reactor vessel according to claim 1, wherein the temperature regulating means comprises externally cooling means located at the lower out periphery of the reactor in the area of the lower phase of molten Pb.

4. The chemical reactor vessel according to claim 3, wherein the externally cooling means comprises water as cooling fluid.

5. The chemical reactor vessel according to claim 1 wherein the injection means comprise a gas injection means being a water cooled tuyere.

6. The chemical reactor vessel according to claim 1, wherein the tip of the internally cooled injection nozzle protrudes from the bottom of the reactor chamber by a depth of at least about 5 cm.

7. The chemical reactor vessel according to claim 1, wherein the tip of the internally cooled injection nozzle protrudes from the bottom of the reactor by a depth of at least about 10 cm.

8. The chemical reactor vessel according to claim 1, wherein the tip of the internally cooled injection nozzle protrudes from the bottom of the reactor by a depth of at least about 20 cm.

9. Process for the continuous oxidation of lead (Pb) to yellow lead oxide (PbO) in a chemical reaction chamber containing a two phase separated system of a lower phase containing predominantly molten Pb and an upper phase consisting essentially of molten PbO in a steady state reaction, by
providing a continuous flow of molten Pb to said reaction chamber,
continuously injecting an oxidizing medium to the lower phase of molten Pb via an injection means protruding from the bottom of the reactor into said reaction chamber,
allowing the oxidizing medium to oxidize said molten Pb by providing a lower phase predominantly comprising Pb and an upper phase essentially consisting of PbO,
adjusting the reaction velocity and the reaction temperature to provide a steady state reaction indicated by an interface phase separation line between the lower phase containing predominantly Pb and the upper phase consisting essentially of PbO appearing at a desired location within the reaction chamber and
continuously draining the overflow to resultant PbO from the upper phase of the reaction chamber.

10. Process according to claim 9, by introducing a continuous flow of molten Pb to the chemical reaction vessel having a temperature adjusted in the range of about 900 °C to about 1200 °C.

11. Process according to claim 9, by introducing a continuous stream of oxygen to the lower phase in the reaction chamber comprising predominantly molten Pb at ambient temperature as fluid oxidizing medium.

## Patentansprüche

1. Chemisches Reaktorgefäß für die kontinuierliche Oxidation von Blei (Pb) zu gelbem Bleioxid (PbO, Bleiglätte), wobei das Reaktorgefäß eine Reaktionskammer mit einer inneren Oberfläche aufweist, die dort, wo sie in Kontakt mit einer zweiphasigen getrennten Schmelze von Pb und PbO ist, wobei die untere Phase vorwiegend Pb enthält und die obere Phase im Wesentlichen aus PbO besteht, aus einem kupferhaltigen Material besteht;
wobei das Reaktorgefäß folgendes enthält:
einen Eintrittsabschnitt für die kontinuierliche Zuführung von geschmolzenem Pb zur Reaktionskammer;
einen Ablaufabschnitt, um geschmolzenes PbO kontinuierlich durch Überlauf aus der Reaktionskammer zu entnehmen;
eine Temperaturregeleinrichtung; und
eine Einspritzeinrichtung, die so eingestellt ist, dass sie der unteren Phase aus geschmolzenem Pb in der Reaktionskammer kontinuierlich ein oxidierendes fluides Medium zuführt;
**dadurch gekennzeichnet, dass**
die Spitze der Einspritzeinrichtung aus dem Boden der Reaktionskammer in die Reaktionskammer hineinragt; und
die Temperaturregeleinrichtung die Reaktionsgeschwindigkeit und die Reaktionstemperatur so einstellt, dass die Grenzflächen-Phasentrennungslinie im Wesentlichen an einer bestimmten Stelle in der Reaktionskammer gehalten wird.

2. Chemisches Reaktorgefäß gemäß Anspruch 1, wobei das kupferhaltige Material aus Kupfermetall besteht.

3. Chemisches Reaktorgefäß gemäß Anspruch 1, wobei die Temperaturregeleinrichtung eine externe Kühleinrichtung umfasst, die sich am unteren äußeren Rand des Reaktors im Bereich der unteren Phase aus geschmolzenem Pb befindet.

4. Chemisches Reaktorgefäß gemäß Anspruch 3, wobei die externe Kühleinrichtung Wasser als Kühlmedium umfasst.

5. Chemisches Reaktorgefäß gemäß Anspruch 1, wobei die Einspritzeinrichtung eine Gaseinleitungseinrichtung umfasst, bei der es sich um eine wassergekühlte Winddüse handelt.

6. Chemisches Reaktorgefäß gemäß Anspruch 1, wobei die Spitze der intern gekühlten Einspritzdüse um eine Länge von wenigstens etwa 5 cm aus dem Boden der Reaktorkammer ragt.

7. Chemisches Reaktorgefäß gemäß Anspruch 1, wobei die Spitze der intern gekühlten Einspritzdüse um eine Länge von wenigstens etwa 10 cm aus dem Boden der Reaktorkammer ragt.

8. Chemisches Reaktorgefäß gemäß Anspruch 1, wobei die Spitze der intern gekühlten Einspritzdüse um eine Länge von wenigstens etwa 20 cm aus dem Boden der Reaktorkammer ragt.

9. Verfahren zur kontinuierlichen Oxidation von Blei (Pb) zu gelbem Bleioxid (PbO) in einer chemischen Reaktionskammer, die ein zweiphasiges getrenntes System aus einer untere Phase, die vorwiegend geschmolzenes Pb enthält, und einer oberen Phase, die im Wesentlichen aus geschmolzenem PbO besteht, in einem stationären Zustand der Reaktion enthält, durch
Bereitstellen eines kontinuierlichen Stroms aus geschmolzenem Pb in die Reaktionskammer;
kontinuierliches Einleiten eines oxidierenden Mediums in die untere Phase aus geschmolzenem Pb über eine Einspritzeinrichtung, die aus dem Boden des Reaktors in die Reaktionskammer hineinragt;
Oxidierenlassen des geschmolzenen Pb durch das oxidierende Medium, indem man eine untere Phase, die vorwiegend Pb umfasst, und eine obere Phase, die im Wesentlichen aus PbO besteht, bereitstellt;
Einstellen der Reaktionsgeschwindigkeit und der Reaktionstemperatur, so dass man eine Reaktion im stationären Zustand erhält, die durch eine Grenzflächen-Phasentrennungslinie zwischen der unteren Phase, die vorwiegend Pb enthält, und der oberen Phase, die im Wesentlichen aus PbO besteht, angezeigt wird, wobei die Linie an einer gewünschten Stelle .innerhalb der Reaktionskammer erscheint; und
kontinuierliches Ablaufenlassen des Überlaufs aus resultierendem PbO aus der oberen Phase der Reaktionskammer.

10. Verfahren gemäß Anspruch 9 durch Einleiten eines kontinuierlichen Stroms aus geschmolzenem Pb in das chemische Reaktionsgefäß, das eine Temperatur aufweist, die im Bereich von etwa 900 °C bis etwa 1200 °C eingestellt ist.

11. Verfahren gemäß Anspruch 9 durch Einleiten eines kontinuierlichen Sauerstoffstroms in die untere Phase in der Reaktionskammer, die vorwiegend geschmolzenes Pb umfasst, bei Umgebungstemperatur als fluides oxidierendes Medium.

## Revendications

1. Réacteur chimique pour l'oxydation en continu du plomb (Pb) en oxyde de plomb jaune (PbO, litharge), réacteur qui a une chambre de réaction présentant une surface interne en un matériau contenant du cuivre, là où il y a contact avec une masse fondue de Pb et PbO, séparée en deux phases, la phase inférieure contenant de manière prédominante Pb et la phase supérieure étant constituée essentiellement de PbO, ledit réacteur ayant une section d'entrée pour l'introduction en continu de Pb fondu dans la chambre de réaction, une section d'évacuation pour l'élimination en continu de PbO fondu de la chambre de réaction par trop-plein, des moyens de réglage de la température et des moyens d'injection réglés pour apporter de manière continuelle un fluide oxydant à la phase inférieure de Pb fondu, dans ladite chambre de réaction, réacteur **caractérisé en ce que** l'extrémité des moyens d'injection fait saillie dans la chambre de réaction à partir du fond de la chambre de réaction, et lesdits moyens de réglage de la température règlent la vitesse de réaction et la température de réaction de manière à ce que la ligne de séparation des phases à l'interface soit maintenue essentiellement à un endroit déterminé dans la chambre de réaction.

2. Réacteur chimique selon la revendication 1, pour lequel le matériau contenant du cuivre est constitué de cuivre métallique.

3. Réacteur chimique selon la revendication 1, dont les moyens de réglage de la température comprennent des moyens de refroidissement externes, placés à la périphérie externe inférieure du réacteur, dans la zone de la phase inférieure de Pb fondu.

4. Réacteur chimique selon la revendication 3, dont les moyens de refroidissement externes comprennent de l'eau comme fluide de refroidissement.

5. Réacteur chimique selon la revendication 1, dont les moyens d'injection comprennent des moyens d'injection de gaz sous la forme d'une tuyère refroidie à l'eau.

6. Réacteur chimique selon la revendication 1, pour lequel l'extrémité de la buse d'injection refroidie intérieurement fait saillie à partir du fond de la chambre de réaction d'une hauteur d'au moins environ 5 cm.

7. Réacteur chimique selon la revendication 1, pour lequel l'extrémité de la buse d'injection refroidie intérieurement fait saillie à partir du fond de la chambre de réaction d'une hauteur d'environ 10 cm.

8. Réacteur chimique selon la revendication 1, pour lequel l'extrémité de la buse d'injection refroidie intérieurement fait saillie à partir du fond de la chambre de réaction d'une hauteur d'au moins environ 20 cm.

9. Procédé pour l'oxydation en continu du plomb (Pb) en oxyde de plomb jaune (PbO) dans une chambre de réaction chimique, contenant un système séparé en deux phases, une phase inférieure contenant de manière prédominante Pb fondu et une phase supérieure constituée essentiellement de PbO fondu, dans une réaction en régime stationnaire, procédé dans lequel :
on introduit un courant continuel de Pb fondu dans ladite chambre de réaction,
on injecte de manière continuelle un oxydant dans la phase inférieure de Pb fondu, par l'intermédiaire de moyens d'injection faisant saillie dans ladite chambre de réaction à partir du fond du réacteur,
on laisse l'oxydant oxyder ledit Pb fondu, ce qui donne une phase inférieure comprenant de manière prédominante Pb et une phase supérieure constituée essentiellement de PbO,
on règle la vitesse de réaction et la température de réaction de manière à obtenir une réaction en régime stationnaire, ce qui est indiqué par une ligne de séparation des phases à l'interface entre la phase inférieure contenant de manière prédominante Pb et la phase supérieure constituée essentiellement de PbO, apparaissant à un endroit voulu dans la chambre de réaction, et
on évacue de manière continuelle le trop-plein de PbO résultant à partir de la phase supérieure de la chambre de réaction.

10. Procédé selon la revendication 9, dans lequel on introduit un courant continuel de Pb fondu dans le récipient de réaction chimique, ayant une température réglée à une valeur comprise dans l'intervalle allant d'environ 900 °C à environ 1200 °C.

11. Procédé selon la revendication 9, dans lequel on introduit dans la chambre de réaction, dans la phase inférieure comprenant de manière prédominante Pb fondu, un courant continuel d'oxygène à la température ambiante, en tant que fluide oxydant.
